# EUROPÄISCHE PATENTSCHRIFT

(11) **EP 3 202 810 B1**
(45) Veröffentlichungstag und Bekanntmachung des Hinweises auf die Patenterteilung: **31.10.2018**
(21) Anmeldenummer: 17154118.8
(22) Anmeldetag: 01.02.2017
(51) Int. Cl.: C08G 18/73, E04F 15/06, C09D 163/00, C09D 175/04

(54) **BESCHICHTUNG FÜR LAUFFLÄCHEN VON METALLBÖDEN**
RUNNING SURFACE COATING FOR METAL FLOORS
REVÊTEMENT DE PANNEAUX DE SOL MÉTALLIQUES

(30) Priorität: 01.02.2016 DE 202016100494 U
(43) Veröffentlichungstag der Anmeldung: 09.08.2017
(73) Patentinhaber: Hundt, Andreas, 96253 Untersiemau (DE)
(72) Erfinder: Hundt, Andreas, 96253 Untersiemau (DE)
(74) Vertreter: Limbeck, Achim

(56) Entgegenhaltungen:
- DE-U1- 20 218 975
- DE-U1- 29 801 039

## Beschreibung

### Technisches Gebiet

Die vorliegende Erfindung betrifft ein Verfahren zur Beschichtung der Lauffläche eines Metallbodens, insbesondere aus Aluminium, welcher eine durch Schleifen oder Strahlen aufgeraute und oxidfreie Oberfläche aus Metall, vorzugsweise Aluminium, aufweist, auf der eine aktiv pigmentierte Zweikomponenten-Grundbeschichtung auf Basis einer isocyanatvernetzenden Acryl/Epoxy-Harzkombination sowie eine darüber vorgesehene Zweikomponenten-Mlttelbeschichtung auf Epoxydharzbasis mit Inhibitoren aufgebracht ist, wobei die Laufflächenbeschichtung zusätzlich eine versiegelte Nutzschicht umfasst.

### Stand der Technik

Gemäß dem Stand der Technik sind Laufflächenbeschichtungen in unterschiedlichen Ausgestaltungen bereits unlängst bekannt. Insbesondere bei Metallböden, welche für den Außenbereich zum Einsatz kommen, ist es besonders wichtig, dass diese eine hohe Festigkeit und Beständigkeit gegen Abrieb und gegenüber äußeren Umwelteinflussen aufweist, vor allem aber beim Einsatz von Aluminium, welches eine gegenüber anderen Werkstoffen erhöhte Ausdehnung aufweist. Bei den bekannten Laufflächenbeschichtungen ist indes zu beobachten, dass diese nach einer gewissen Nutzungsdauer abnutzen bzw. verschleißen.

Aus der Druckschrift DE 202 18 975 U1 ist ein Metallboden mit einer Grundierung, einer Nutzschicht aus einer zweikomponentige Epoxid-Polyurethanharz-Kombination als Bindemittel mit Normalkorund, Glasgranulat oder Quarzsand als Einstreumittel, ferner eine Versiegelung aus zweikomponentigem Epoxidharz, einer Haftvermittlerschicht aus einer Acrylat-bzw. Polyacrylatverbindung sowie einer Schicht eines zweikomponentigen PU-Harzes, gefüllt mit einem körpnigen Material bekannt.

Aus der DE 298 01 039 U1 ist ein Antirutsch-Belag mit einer metallischen Trägerschicht und einer darauf angeordneten Schicht eines ZweiKomponenten-Polyurethanharzes bekannt, wobei in dieser Schicht ein körniges Material enthalten ist, zwischen der metallischen Trägerschicht und der Zwei-KomponentenPolyurethanschicht eine Haftvermittlerschicht angeordnet ist, die Haftvermittlerschicht von einer Acrylat- bzw. Polyacrylatverbindung gebildet wird und das körnige Material aus Siliciumdioxid, Korund (Al2O3), insbesondere aus Sliciumcarbid besteht.

### Darstellung der Erfindung

Der vorliegenden Erfindung liegt daher die Aufgabe zu Grunde, ein Verfahren zur Beschichtung der Lauffläche eines Metallbodens zu schaffen, welches die vorgenannten Probleme ausräumt und welches eine gegenüber dem Stand der Technik verbesserte und besonders hohe Beständigkeit aufweist.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Verfahrens sind in den abhängigen Unteransprüchen angegeben.

Erfindungsgemäß ist ein Verfahren der eingangs genannten Art dadurch gekennzeichnet, dass die Nutzschicht eine in die noch klebende Oberfläche der Mittelbeschichtung mittels Hochdruck einzublasende Beschichtung aus Polyvinylacetat mit Zuschlag von Siliziumkarbit umfasst.

Zur Ausführung des erfindungsgemäßen Verfahrens wird in einem ersten Schritt in bekannter Weise die Oberfläche der zu beschichtetenden Aluminium/oder Metallfläche durch Schleifen oder Strahlen aufgeraut und oxidfrei gemacht. Vorzugsweise kann diese dann zusätzlich mit Alkohol entfettet werden.

Bei der Grundierung wird sodann vorzugsweise eine Trockenschichtdicke der aktiv pigmentierten Zweikomponenten-Grundbeschichtung auf Basis einer isocyanatvernetzenden Acryl/Epoxy-Harzkombination von in etwa 60-80 mµ durch Rollen aufgetragen. Die Masse dieser Grundbeschichtung pro Quatratmeter Beschichtung liegt bei vorzugsweise etwa 300 Gramm.

Bei der Mittelbeschichtung wird in einem nächsten Schritt bevorzugt eine Trockenschichtdicke der Zweikomponenten-Beschichtung auf Epoxydharzbasis mit Inhibitoren von in etwa 400-500 mµ ebenfalls durch Rollen aufgetragen. Die Masse dieser Mittelbeschichtung pro Quatratmeter Beschichtung liegt bei vorzugsweise etwa 400-500 Gramm.

Es erfolgt in einem weiteren Schritt die Herstellung der erfindungsgemäßen Nutzschicht durch das Aufbringen der Nutzbeschichtung in die noch klebende Oberfläche der Mittelbeschichtung mittels Hochdruck, wobei der Siliziumkarbit-Zuschlag in einer besonders vorteilhaften Ausführungsform der Erfindung bei in etwa 20 Gew.-% der Gesamtmasse von Polyvinylacetat liegt und die Trockenschichtdicke der Nutzschicht in etwa 80-100 mµ beträgt. Die Masse der Nutzschicht pro Quatratmeter Beschichtung liegt vorzugsweise bei in etwa 300-500 Gramm. Zur anschließenden Gesamthaftung wird vorteilhaft durch einen ca. 30 minütigen Einbrennvorgang bei vorzugsweise ca. 60 Grad Celsius ein Anbacken der pulvrigen und blättrigen Gesamtmasse am Haftgrund erreicht. Durch den Wärmevorgang wird des weiteren verhindert, dass das Einblasmaterial im dick aufgetragenen Untergrund einsinkt.

In einem letzten Schritt erfolgt die Anfertigung der Versiegelung durch Rollen. Hierbei wird ein zweikomponenter Klarlack auf Basis von Acryl-Polyurethan unter Beimischung von aliphatischem Polyisocyanat im Verhältnis von vorzugsweise 5 : 1 zur Erhöhung von Härte und Schlagzähigkeit sowie zur Erhöhung der mechanischen und chemischen Beständigkeit von Ölen, Treibstoff, Salzen und verdünnten Säuren aufgetragen. Zur Erhöhung des Verlaufs und des Anbackens an der vorbeschriebenen Nutzschicht erfolgt sodann ein weiterer Einbrennvorgang für ca. 15 Minuten bei vorzugsweise 60 Grad Celsius. Die Trockenschichtdicke der Versiegelung liegt vorzugsweise bei in etwa 40 mµ, die Masse der Versiegelung pro Quatratmeter Beschichtung bei in etwa 200-300 Gramm.

Das erfindungsgemäße Verfahren beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

## Patentansprüche

1. Verfahren zur Beschichtung der Lauffläche eines Metallbodens mit einer Nutzschicht, umfassend die folgende Schrittreihenfolge:
a) Aufrauen und Oxidfreimachen der Metalloberfläche
b) Aufbringen einer aktiv pigmentierte Zweikomponenten-Grundbeschichtung auf Basis einer isocyanatvernetzenden Acryl/Epoxy-Harzkombination
c) Aufbringen einer Zweikomponenten-Mlttelbeschichtung auf Epoxydharzbasis mit Inhibitoren
**gekennzeichnet durch** die weiteren Schritte:
d) Herstellen einer Nutzschicht durch das Aufbringen einer Nutzbeschichtung in die noch klebende Oberfläche der Mittelbeschichtung, wobei die Nutzbeschichtung eine mittels Hochdruck einzublasende Beschichtung aus Polyvinylacetat mit Zuschlag von Siliziumkarbit umfasst,
e) Versiegeln der Nutzschicht.

2. Verfahren nach Anspruch 1,
**dadurch gekennzeichnet, dass**
der Siliziumkarbit-Zuschlag bei in etwa 20 Gew.-% der Gesamtmasse von Polyvinylacetat liegt.

3. Verfahren nach den Ansprüchen 1 oder 2,
**dadurch gekennzeichnet, dass**
die Versiegelung einen zweikomponenten Klarlack auf Basis von Acryl-Polyurethan unter Beimischung von aliphatischem Polyisocyanat zur Erhöhung von Härte und Schlagzähigkeit sowie zur Erhöhung der mechanischen und chemischen Beständigkeit von Ölen, Treibstoff, Salzen und verdünnten Säuren umfasst.

4. Verfahren nach Anspruch 3,
**dadurch gekennzeichnet, dass**
die Gew.-%-Anteile an aliphatischem Polyisocyanat und zweikomponenten Klarlack im Verhältnis 1 : 5 stehen.

5. Verfahren nach einem Ansprüche 3-4,
**dadurch gekennzeichnet, dass**
a) die Trockenschichtdicke der Grundschicht in etwa 60-80 mµ,
b) die Trockenschichtdicke der Mittelschicht in etwa 400-500 mµ,
c) die Trockenschichtdicke der Nutzschicht in etwa 80-100 mµ und
d) die Trockenschichtdicke der Versiegelung in etwa 40 mµ beträgt.

6. Verfahren nach einem der vorangegangenen Ansprüche,
**dadurch gekennzeichnet, dass**
die Masse der Grundbeschichtung pro Quatratmeter Beschichtung bei etwa 300 Gramm liegt.

7. Verfahren nach einem der vorangegangenen Ansprüche,
**dadurch gekennzeichnet, dass**
die Masse der Mittelschicht pro Quatratmeter Beschichtung bei in etwa 400-500 Gramm liegt.

8. Verfahren nach einem der vorangegangenen Ansprüche,
**dadurch gekennzeichnet, dass**
die Masse der Nutzschicht pro Quatratmeter Beschichtung bei in etwa 300-500 Gramm liegt.

9. Verfahren nach einem der vorangegangenen Ansprüche 3 bis 8,
**dadurch gekennzeichnet, dass**
die Masse der Versiegelung pro Quatratmeter Beschichtung bei in etwa 200-300 Gramm liegt.

10. Verfahren nach einem der vorangegangenen Ansprüche, **dadurch gekennzeichnet, dass**
die Körnung des Polyvinylacetats bei in etwa 2- 5 mm liegt.

11. Verfahren nach einem der vorangegangenen Ansprüche, **dadurch gekennzeichnet, dass**
die Körnung des Siliziumkarbits bei in etwa 0,2 - 0,6 mm liegt.

## Claims

1. Process for coating the top surface of a metal floor with a top layer, comprising the following procedure sequence:
a) Roughing and de-oxidizing the metal surface
b) Applying an active pigmented two-component primer coating based on an isocyanate-linked acrylic/epoxy resin combination
c) Applying a two-component middle coating based on epoxy resin with inhibitors
**characterized by** the following steps:
d) Creating a top layer by applying a top coating onto the at this point still sticky and uncured surface of the middle coating, whereby the top coating comprises a coating of poly-vinyl acetate with the additive silicon carbide applied by high pressure injection
e) Sealing of the top layer.

2. Process according to claim 1,
**characterized in that**
the silicon carbide additive amounts to approximately 20 weight per cent of the total mass of the poly-vinyl acetate.

3. Process according to claims 1 or 2,
**characterized in that**
the sealing layer comprises a two-component clear lacquer based on acrylic polyurethane with an additive of aliphatic poly-isocyanate to achieve an increase of hardness and impact resilience as well as the increase of the mechanical and chemical resistance to oil, fuels, salts and diluted acids.

4. Process according to claim 3,
**characterized in that**
the weight percent shares of an aliphatic poly-isocyanate and the two-component clear lacquer respectively are in a ration of 1:5.

5. Process according to one of the claims 3 and 4,
**characterized in that**
a) The dry layer thickness of the base coat amounts to approximately 60-80 mµ,
b) The dry layer thickness of the middle coat amounts to approximately 400-500 mµ,
c) The dry layer thickness of the top coat amounts to approximately 80-100 mµ und
d) The dry layer thickness of the sealing layer amounts to approximately 40 mµ,

6. Process according to one of the preceding claims,
**characterized in that**
the mass of the base coat amounts to approximately 300 grams per square metre.

7. Process according to one of the preceding claims,
**characterized in that**
the mass of the middle layer amounts to approximately 400-500 grams per square metre.

8. Process according to one of the preceding claims,
**characterized in that**
the mass of the top layer amounts to approximately 300-500 grams per square metre.

9. Process according to one of the preceding claims 3 bis 8,
**characterized in that**
the mass of the sealing layer amounts to approximately 200-300 grams per square metre.

10. Process according to one of the preceding claims,
**characterized in that**
the grain size of the poly-vinyl acetate amounts to approximately 2-5 mm.

11. Process according to one of the preceding claims,
**characterized in that**
the grain size of the silicon carbide amounts to approximately 0,2-0,6 mm.

## Revendications

1. Procédé pour le revêtement de la surface de frottement d'un plancher métallique avec une couche d'usure, comprenant la séquence des étapes suivantes :
a) rugosité et oxydation de la surface métallique
b) application d'un revêtement de fond de deux composants à pigments actifs à base d'une combinaison de résine acrylique/époxy réticulée par un durcisseur isocyanate
c) application d'une couche intermédiaire à deux composants à base de résine époxy avec des inhibiteurs
**caractérisé par** les autres étapes suivantes :
d) production d'une couche d'usure en appliquant un enduit d'usure à la surface encore adhésive du revêtement intermédiaire, dans lequel le revêtement d'usure comprend une couche d'acétate de polyvinyle haute pression avec supplément de carbure de silicium,
e) étanchéité de la couche d'usure.

2. Procédure selon la revendication 1,
**caractérisé par le fait que**
l'addition de carbure de silicium représente environ 20% en poids de la masse totale d'acétate de polyvinyle.

3. Procédure selon les revendications 1 ou 2,
**caractérisé par le fait que**
l'étanchéité comprend une couche transparente à deux composants à base de polyuréthane acrylique avec l'addition de polyisocyanate aliphatique pour augmenter la dureté et la force d'impact, ainsi que pour augmenter la résistance mécanique et chimique aux huiles, au carburant, aux sels et aux acides dilués.

4. Procédure selon la revendication 3,
**caractérisé par le fait que**
les pourcentages en poids de polyisocyanate aliphatique et de couche transparente à deux composants sont dans le rapport 1:5.

5. Procédure selon les revendications 3-4,
**caractérisé par le fait que**
a) l'épaisseur de la couche sèche du revêtement de base est d'environ 60-80 mµ,
b) l'épaisseur de la couche sèche du revêtement intermédiaire est d'environ 400-500 mµ,
c) l'épaisseur de la couche sèche du revêtement d'usure est d'environ 80-100 mµ et
d) l'épaisseur de la couche sèche du revêtement d'étanchéité est d'environ 40 mµ.

6. Procédure selon l'une des revendications précédentes,
**caractérisé par le fait que**
la masse de la couche de base par mètre carré de revêtement est d'environ 300 grammes.

7. Procédure selon l'une des revendications précédentes,
**caractérisé par le fait que**
la masse de la couche intermédiaire par mètre carré de revêtement est d'environ 400 à 500 grammes.

8. Procédure selon l'une des revendications précédentes,
**caractérisé par le fait que**
la masse de la couche d'usure par mètre carré de revêtement est d'environ 300 à 500 grammes.

9. Procédure selon l'une des précédentes revendications 3 à 8,
**caractérisé par le fait que**
La masse de la couche d'étanchéité par mètre carré de revêtement est d'environ 200 à 300 grammes.

10. Procédure selon l'une des revendications précédentes,
**caractérisé par le fait que**
la taille du grain d'acétate de polyvinyle est d'environ 2 à 5 mm.

11. Procédure selon l'une des revendications précédentes,
**caractérisé par le fait que**
la taille du grain de carbure de silicium est d'environ 0,2 à 0,6 mm.
